# EUROPEAN PATENT SPECIFICATION

(11) **EP 0 642 299 B1**
(45) Date of publication and mention of the grant of the patent: **30.09.1998**
(21) Application number: 93909451.2
(22) Date of filing: 23.04.1993
(51) Int. Cl.: A01G 27/00

(54) **METHOD AND APPARATUS FOR INTEGRATED PRE-CULTIVATION AND ULTIMATE CULTIVATION OF PLANTS**
VERFAHREN UND VORRICHTUNG FÜR DIE INTEGRIERTE VORZUCHT UND ENDZUCHT VON PFLANZEN
PROCEDE ET APPAREIL DESTINES A LA PRE-CULTURE ET A LA CULTURE INTEGREES DE PLANTES

(30) Priority: 24.04.1992 SE 9201301
(43) Date of publication of application: 15.03.1995
(73) Proprietor: HENTTONEN, Martti, S-570 92 Figeholm (SE)
(72) Inventor: HENTTONEN, Martti, S-570 92 Figeholm (SE)
(74) Representative: Avellan-Hultman, Olle
(86) International application number: SE9300354
(87) International publication number: WO9321756

(56) References cited:
- WO-A-80/02359
- CH-A- 333 414
- GB-A- 1 192 431
- SE-B- 455 751

## Description

The present invention generally related to a method and an apparatus for cultivation of plants, and the invention is more particularly directed to a system for "integrated cultivation of plants", by which expression is meant a cultivation system comprising a long-time irrigation apparatus, in which
- seeds are allowed to germinate and to propagate to tender plants standing on a moisture bed,
- the plant thereby formed, as set in a larger, second simple disposable container, named re-plantation container, is pre-cultivated or cultivated at the plant purveyor's place, likewise standing on a moisture bed,
- whereupon the plant, still in the same container, and without any type of re-planting, is moved to the consumer's place for ultimate growth of the plant, whereby the plant, still in its re-plantation container, is placed standing directly on top of a means for supplying water and nutrients (fertilizer) to the plant,
- and whereby the plant, in advance thereof, may eventually be exposed on an available cultivation bed or an irrigation apparatus in a plant storing house or at a plant dealer's place.

A cultivation system, in which the plant is pre-cultivated in a container filled with earth or any type of cultivation substrate is known from the Swedish patent having the laid out publication number 421.854, and whereby the container has a water sucking foot which is immersed in a water reservoir which is in common for many plant containers, and whereby the plant is irrigated by use of the capillary forces simulating the irrigation in the nature.

The plant which has been pre-cultivated accordingly can later, together with is re-plantation container, be moved outdoors or indoors for ultimate cultivation of the plant, for instance in a cultivation apparatus of the type which is known from the present inventor's own Swedish patent No 455.751, equivalent to the US patent Nr 5,050,343.

The cultivation containers of said known systems are not intended for, and also not useful for seed germination/propagation, since the feet which are filled with earth (and water) generally give a too high water content for having the seed germinate and to propagate in a suitable way. It even may happen that the seeds become rotten in the environment created in the known cultivation containers. Further, said known cultivation containers are not suited for mounting of individual irrigation containers, for instance such containers which are known from the US patent No 4,156,324 in the name of the present inventor himself, and in most cases the plants have to be re-planted and this may damage the tiny hair-roots of the plant. The re-planting normally also causes changes in the growth culture of the plants, often even shock-like changes of the growth culture, and this may cause damages of the plants or may hazard the cultivation possibilities for the plant. In fact, for making both the seed and the young plant germinate or grow respectively as good as possible the seed or the young plant must get a correct humidity, a correct temperature, a correct amount of light, a correct amount of an adequate fertilizer and nutrient, it must be oxygenized, eventually existing excess of water must be drained etc. All said circumstances, which vary for each individual type of plant and also at different cultivation stages for one and the same plant must be fulfilled in a well operating, integrated cultivation system as intended to be provided by the present invention.

When having plants grow in public places, or otherwise where it may be desired to exchange "old" plants by "new" plants or "other" plants at certain intervals it has so far generally been necessary to remove the "old" plant from the cultivation container, sometimes even to substitute the old earth or cultivation substrate by new earth or cultivation substrate, and often also the exchange the water, and thereafter to fill new earth both in the water-sucking foot and in the actual cultivation (irrigation) container, further to fill new water, and finally to set the "new" plant in the cultivation container.

Apart from the fact that the "new" plant is thereby subjected to a severe cultivation shock, the above mentioned handling is relatively time consuming and expensive. In the known apparatus it is also a necessary to make use of waterproof cultivation containers and irrigation containers. It is normally not possible to place such a cultivation and irrigation container together with the plant in an additional outer container which is not waterproof.

Other types of cultivation systems are formed so that the seed is allowed to germinate and to be pre-cultivated or cultivated in a bed which is filled with earth or another cultivation substrate and which is in common for a great many plants. This classical method is disadvantageous in that the cultivation of any and all plants is made in a common mass of earth or in a common water tank, and this means that a disease appearing in only one of said all plants may quickly spreads to all plants in one and the same cultivation bed or one and the same water container.

Most of the known pre-cultivation containers also are formed so that there is no possibility of draining eventually existing excess or water in the pre-cultivation container or water container or in the water-sucking foot, and also so that there is no possibility for oxygen which needed for the root system of the plant and which is supplied by means of a flow of air towards the root system, to penetrate upwards or downwards as far as to the root system of the plant.

Therefore, the object of the invention has been to solve the problem of providing a complete, integrated cultivation system, in which a plant can be propagated from seed to a ready plant in an optimum way, and in which integrated cultivation system
- it is possible to seed propagate, pre-cultivate/cultivate and pre-grow a plant under optimum conditions with a specially calculated and controlled supply of fertilizers (nutrients), water, oxygen, light and heat,
- the plant can be pre-cultivated and ultimate cultivated as existing in one and the same container, in particular a simple and cheap disposable container without the need of re-planting the plant since the container is placed loosely standing on top of a water/nutrient bed,
- in which both the seed propagation and the pre-cultivation and the main cultivation is made without the risque that a diseased plant infects other plants in any part of the cultivation system,
- in which the pre-cultivated plant, without any re-planting thereof, can be directly moved to a storing place for being kept in stock or for being intermediate-cultivated, or can be moved directly to a retailer's place and/or finally to an available place of ultimately culturing or growth of the plant,
- in which the plant, already during the seed propagation, the cultivation and the pre-growth thereof, is allowed to acclimatize itself and to make itself accustomed both to its ultimate cultivation and growth environment and to the capillary irrigation system,
- in which is it possible to continuously control the cultivation circumstances during the entire cultivation/pre-growth and ultimate growth of the plant,
- in which the plant is present in the same cultivation environment during the entire cultivation, pre-growth and ultimate growth phases of the plant, whereby any risques of culturing shocks for the plants are eliminated,
- in which an "old" plant can quickly and very easily be removed from the ultimate culturing/growth place and can be substituted by a "new" plant without the need of substituting the earth or cultivation substrate or the water thereof,
- in which the ultimate cultivation means or place is formed so that any existing excess of water is being drained, and so that the roots of the plant are aerated and oxygenized,
- in which the ultimate cultivation means is so simple and can be made so small that it can be placed in practically any outer container, which outer container does not even need to be waterproof,
- in which the disposable container or pot used for the cultivation or for the pre-growth of the plant can be used for any types of ultimate cultivation apparatus having means for capillary irrigation of the plant from underneath the cultivation pot,
- in which the plant can both be cultivated/pre-cultivated and can be ultimately cultivated/frown above the ground by so called "free-supported" cultivation, whereby is meant a culturing apparatus, in which the irrigation system can be mounted practically anywhere,
- and by which integrated cultivation system it is possible to establish a very rational handling of the entire cultivation cycle both for flowers and for vegetables and any other possible plants.

The main characteristics of the invention as defined in method claim 1 and in apparatus claim 6, is to provide, in a complete, integrated cultivation system, and under optimum conditions at each special occasion, a seed propagation, and a pre-cultivation, cultivation, intermediate growth and ultimate growth of a plant while loosely standing in surface contact with the top of a capillary bed, whereby is meant a bed of any material which by a capillary suction action gives off liquid and fertilizer upwards to the earth/cultivation substrate in the cultivation container in a nature simulating way at the same time as the capillary bed allows a draining of excess of water in the cultivation container, and also an aeration and oxygenizing of the roots of the plants in the cultivation container.

The cultivation system is also formed so that the plant can be at least pre-cultivated and ultimate-cultivated without any re-planting of the plant, which re-planting is ordinarily necessary and which may damage the plant and in particular the roots thereof, and in which one and the same cultivation container or pot of disposable type is used both for cultivation, pre-growth and intermediate growth, storing and ultimate-growth of the plant.

This is done in that the plant which has been germinated from a seed, pre-cultivated or pre-grown is placed, still in its original cultivation substrate, standing on an irrigation apparatus which is a unit that is completely separate from the cultivation container and can be released therefrom, and which issues moisture, fertilizer and oxygen to the plant in the cultivation container by a direct surface contact between a capillary bed, which issues water and fertilizer, and the bottom of the cultivation substrate in the cultivation container. The irrigation apparatus comprises a water and fertilizer containing receptacle on which there is a releasable lid or a perforated or slotted intermediate disc, and on a level above said intermediate disc a capillary bed which can be one or more feet filled with a water sucking substrate. Each such foot has a perforated bottom which is immersed in the water container. Above the water sucking feet there may eventually be an additional, greater capillary bed. The lid or the intermediate disc also has several slots or bores the object of which both is to drain excess water from the cultivation pot and to oxygenize and ventilate the roots of the plants.

Further characteristics of the invention and advantages therewith will be evident from the following detailed specification in which reference will be made to the accompanying drawings.

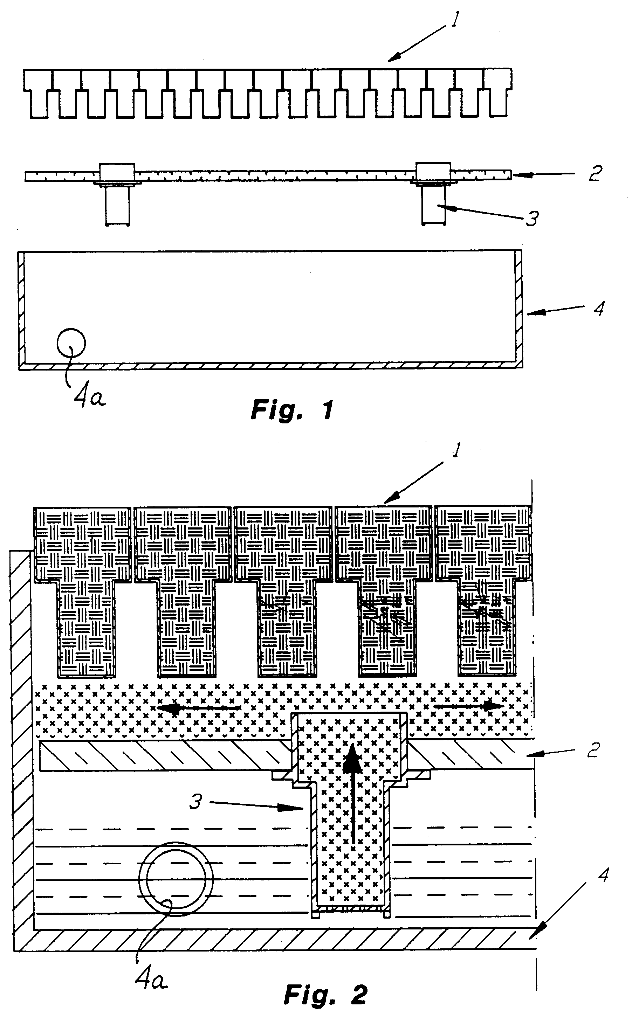

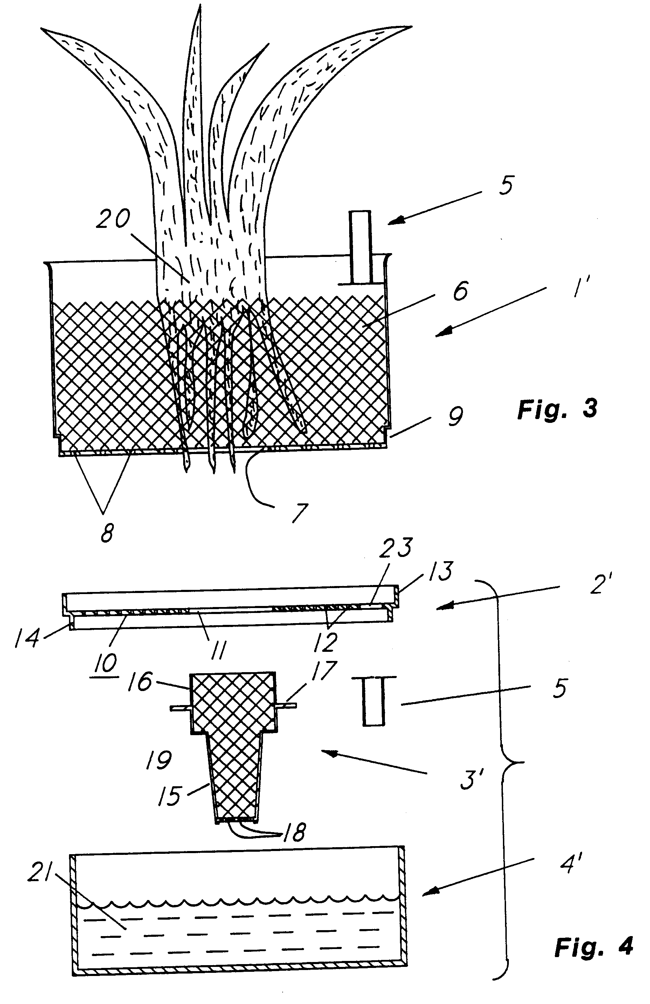

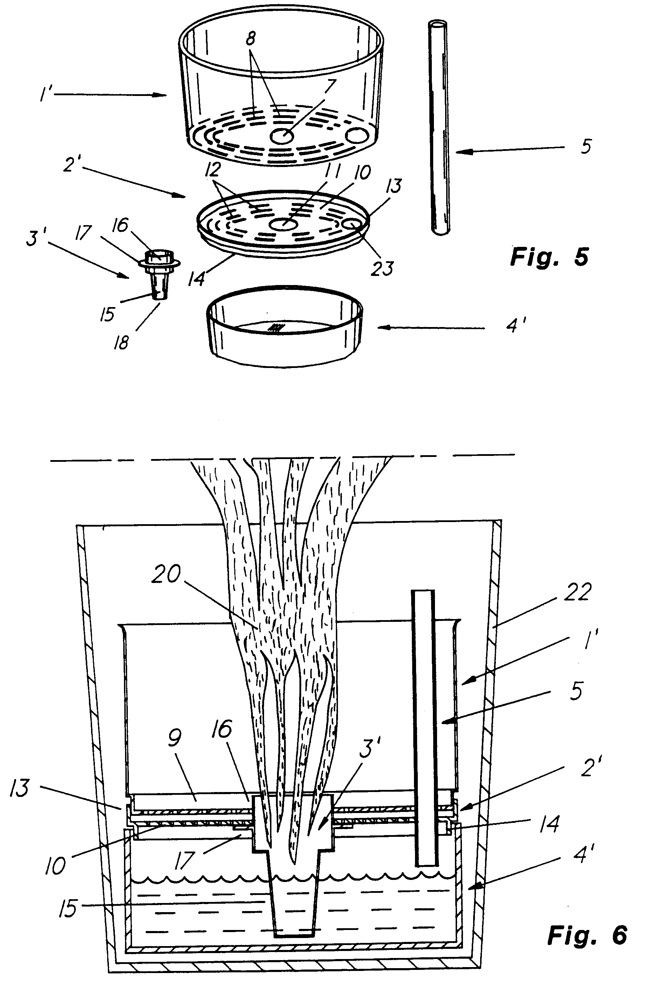

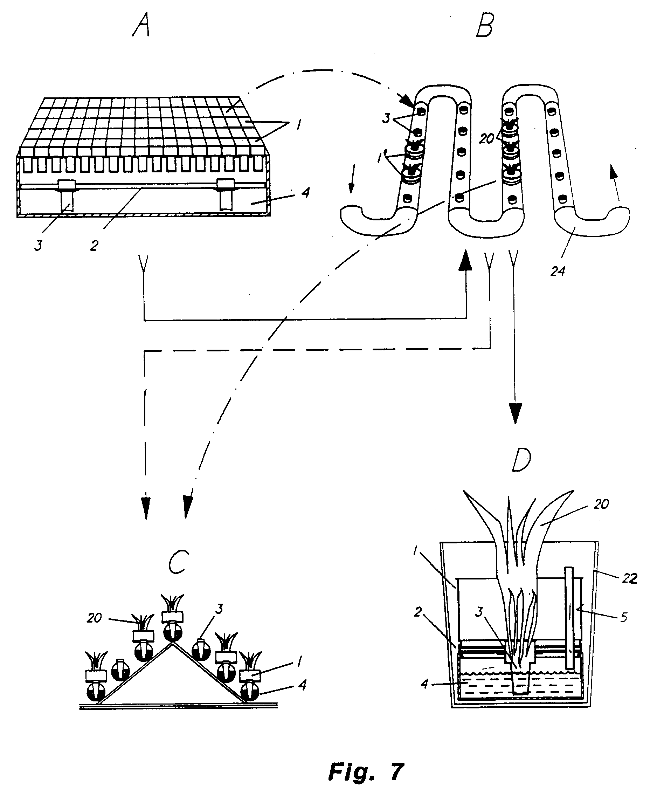

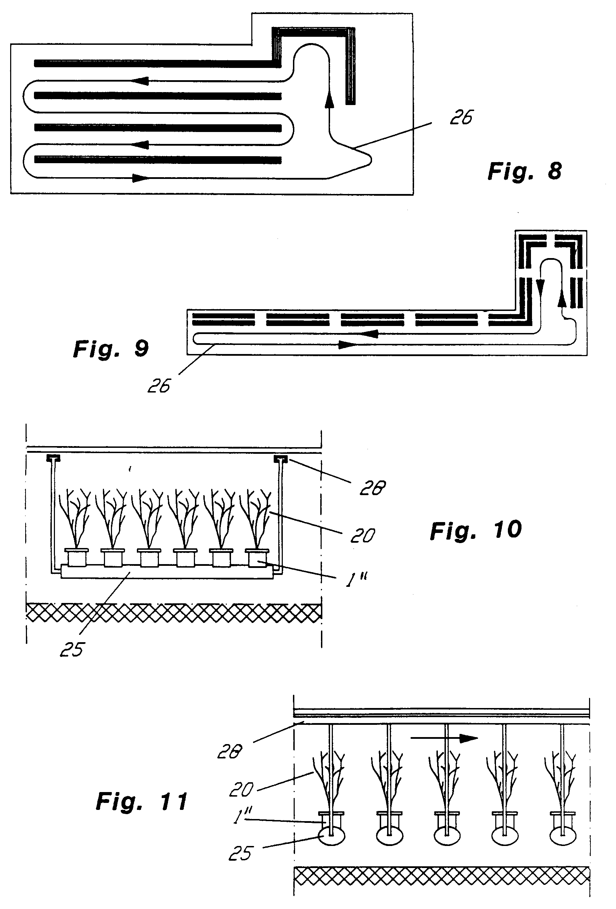

In the drawings figure 1 is an exploded view of a seed propagation apparatus, and figure 2 shows, partially and in an enlarged scale, the same apparatus in its assembled condition. Figure 3 shows a pre-cultivation pot included in the system according to the invention filled with earth and having a plant therein. Figure 4 is an exploded view in a vertical cross section of a stationary cultivation apparatus comprising a water container, an irrigation foot filled with earth, a draining and aerating disc and a water supply and aerating tube. Figure 5 is an exploded view of all five parts included in the cultivation container according to figures 3 and 4, and figure 6 is an example of an apparatus for ultimate-growth of a plant in a cultivation pot which is mounted on an available, stationary ultimate-growth unit, and in which the complete apparatus is placed in an outer container. Figure 7 diagrammatically illustrates the handling of a plant from a stage in which seeds are propagated/germinated, and from a stage in which the cultivation or pre-growth of the plant starts until the plant is placed in its ultimate cultivation apparatus. Figure 8 is a plan view of an example of a pre-cultivation apparatus, and figure 9 correspondingly shows an example of an alternative pre-cultivation apparatus. Figures 10 and 11 show transversal and a longitudinal vertical cross section views, respectively, through a pre-cultivation unit of a continuous conveyor type.

The complete, integrated cultivation system according to the invention comprises three different main parts and eventually an intermediate part, namely
a) the seed propagation part, see figures 1, 2 and 7A,
b) the re-plantation part, se figures 3-4, 7B, 8 and 9
c) the ultimate growth part, see figures 5, 6 and figure 7D, and
d) eventually an exhibition and sale part, see figure 7C.

All parts included in the different apartments of the apparatus comprises 1) a water container with 2) one or more feet filled with earth or any water sucking substrate, which foot/feet is/are, with the bottom part thereof, immersed in a water bath in the water container and which with its upper surface in contact with 3) a water distribution means, 4) an intermediate disc in which the water sucking foot/feet is/are mounted, and which is formed with slots, perforated bores or similar means for providing an oxygenizing upwards of the plant and a draining of possible excess of water, and 5) a simple and cheap disposable container for the plant.

In figure 1 there is shown the seed propagation/germination part in the form of a seed propagation container 1, a perforated intermediate disc 2, two or more water sucking feet 3 which can be mounted in said intermediate disc and which are formed with a perforated bottom, and a water container 4 in which the water sucking feet are immersed.

The seed propagation container 1 is in the form of a cultivation brim comprising a large number of cavities, for instance 16 x 16 = 256 cavities, which are filled with earth or any cultivation substrate, and in each cavity of which a seed is adapted to be sown by means of a sowing machine. Each cavity of the cultivation brim 1 has a partly open bottom for making it possible to suck up moisture to the earth of the cavities by a surface contact with a moisture supplying medium. In order to make a seed grow and form roots and foliage as good as possible it is important that the seed is not subjected to a too high moistness, and to this end there is a relatively thin bed of sand, rockwool or any type of fibre mat or a similar means on top of the water sucking feet, which bed covers the entire perforated intermediate disc 2. The purpose of the bed of sand, rockwool or fibre, which can be called a "capillary bed", is to distribute, by capillary action, the moisture from the suction feet evenly over the entire cultivation brim having said great number of seed compartments. In this case it is quite sufficient to make use of only a few water sucking feet, and in the illustrated case there is shown only two water sucking feet 3. The cultivation brim 1 is standing with the bottom surface thereof directly on top of the capillary bed, and it gets a suitable amount of moisture by direct surface contact between the capillary bed and the earth in the cavities of the cultivation brim. As known, liquid of a suitable temperature and having a suitable amount of fertilizer is circulated through the water container 4 as indicated with the water circulation bore 4a.

The cultivation or intermediate cultivation part shown in figures 3 and 4 comprises, like the seed propagation part, four different main parts, namely a cultivation container or cultivation pot 1, an intermediate disc 2 arranged to drain and aerate the earth or the cultivation substrate of the cultivation pot 1, a water sucking foot 3 which can be mounted in the intermediate disc 2, which forms the above mentioned capillary bed, a water container 4, and eventually a tube 5 for filling of water into the container 4 and for aerating/oxygenizing of the plant of the cultivation container or pot 1.

The cultivation pot 1 can be of any simple and cheap type, for instance a pot of simple plastic material, of waxed cardboard, of thin tin etc. The pot is partly filled with earth 6 or any known type of cultivation substrate. At its bottom the cultivation pot is formed with a through bore 7 which to form and size mainly coincides with the upwardly projecting part of the water foot 3 so that the upper edge of the foot can project some distance above the bottom of the cultivation pot, and whereby the earth or the cultivation substrate, the capillary bed, of the foot 3 comes into surface contact with the earth or the cultivation substrate in the cultivation pot. Thereby water and nutrients are transferred to the earth and the cultivation substrate 6 of the cultivation pot, and the part of the foot 33 projecting into the pot 1 also stabilizes the cultivation pot 1 so that it can not be displaced sideways on the intermediate disc 2. The bore 7 of the bottom of the cultivation pot may be centrally disposed, but it is also possible to provide the bore off centre. By such arrangement it is possible to use a cultivation pot which has less bottom surface than the intermediate disc 2, and the pot 1 can thereby be adjusted in one direction or the other on the intermediate disc 2. At the bottom of the cultivation pot 1 there are also several narrow slots or bores 8 adapted to allow a draining of excess water and for providing an aeration/oxygenizing in the direction upwards of the earth 6 in the cultivation pot 1. The lower part of the pot also can have a flange 9 matching inside an upwardly projecting edge of the intermediate disc 2.

The intermediate disc 2 acts as a sort of lid for the water container 4, and it is formed with a supporting intermediate plane 10 having a through bore 11 which to shape and size coincides with the upwardly projecting part of the water foot 3. The water foot 3 can be introduced in the disc bore 11 and is thereby kept at least rather steadily therein. The intermediate plane 10 also has several through narrow slots 12 or bores for draining excess water from the cultivation pot 1 into the water container 4 and for letting up air/oxygen to the plant roots of the cultivation pot 1. The intermediate disc also has an all around and upwardly extending rim 13 acting both as an overflow edge for excess water of the cultivation pot 1 and also as a means for stabilizing the pot 1 in that the flange 9 thereof snugly fits inside the rim 13. The intermediate disc 2 also may be formed with a downwardly projecting edge 14 which fits inside the water container 4 and by means of which the intermediate disc can be secured as a type of lid on top of the water container 4.

The water foot 3 is formed, at the lower part thereof, as a downwardly converging foot part 15, and, at the upper part thereof, with a substantially cylindrical foot part 16 having an outer flange 17 forming a stop for the foot against the bottom surface of the intermediate disc when the upper part 16 of the foot is introduced upwards in the bore 11 of the intermediate disc 2 arranged therefore. As known the bottom of the foot 3 is formed with several bores 18 for letting water into the foot. When in use the foot should be filled with earth 19 or any other type of water sucking mass which has an adequate capillary action for sucking up a suitable amount of water and nutrients/fertilizers to the earth 6 and to the plant 20 in the cultivation pot 1.

The water container 4 can be of any kind, and in the drawings it is illustrated as an open cylindrical container on top of which the intermediate disc 2 can be releasably secured.

Preferably, but not necessarily, the apparatus is formed with a tube 5 extending through or outside the cultivation pot 1 and down through the intermediate disc 2 into the water container, as best shown in figure 6. The tube 5 can be used for filling of water 21, eventually having some additive of fertilizer. Further, air enters the water container for aeration/oxygenizing of the earth 6 and the plant roots.

The entire irrigation apparatus can be housed in an outer container 22, see figure 6. Since the irrigation apparatus, considered as a complete unit, is water proof the outer container can be of any material whether water sealing or non-water sealing. In figure 6 is shown an example of an outer container in which the irrigation apparatus is put down so that only the decorative part of the plant 20 is visible above the upper edge of the outer container 22.

The assembling of the irrigation apparatus is accomplished simply in that the water foot 3 is filled with a water sucking substrate 19 and is from underneath pressed into the bore 11 of the intermediate disc 2 which, in turn, is press connected onto the water container 4 by means of its bottom edge 14, or it is put down in the water container so that it is carried with its suction feet 3 standing on the bottom of the water container. The water/air tube 5 is put down through the intermediate disc bore 23 provided for this purpose. After water has been filled in the water container 4 the irrigation apparatus is ready to receive a cultivation pot together with its plant.

In figure 7 is shown an example, not restricting for the invention, how cultivation of plants can take place. In station A seeds are sown, preferably by machine, in the cultivation substrate in each of the cavities of the cultivation brim 1, and the seeds are allowed to germinate until some foliage appears above the earth. By use of only some few suction feet and a large capillary bed there is a sparing irrigation, especially during the first germination phase. The supply of nutrients, oxygen, light and heat is supervised and controlled as good as possible during the germination phase. When the seed has germinated and has grown to a suitable size each plant embryo 20 is moved and is put down in a pre-cultivation container 1' in the re-plantation part B together with the earth or substrate mass in the cavity of the cultivation brim, and without any damaging influence on the plant foliage or the plant roots. After the seed has propagated/germinated in the seed propagation part A the entire earth mass together with the plant embryo is consequently put down in a cultivation container or pot 1' filled with earth or cultivation substrate, which container or pot 1' is of a simple and cheap disposable type. The said cultivation container or pot is placed on an irrigation bed, for instance a bed formed by a water foot 3 of the same type as the water foot shown in figures 4-6, which water foot can be sealingly mounted in an irrigation tube 24, see figure 7, in which irrigation tube 24 water and eventually an additive of a fertilizer is circulated as indicated with the arrow in figure 7.

The plant is thereby irrigated in a capillary way with water which is circulated through the irrigation tube 24 and which has a suitably controlled temperature and a suitable addition of fertilizer etc. The plant is allowed to acclimatize to such a capillary irrigation in the pre-cultivation part B, and it is allowed to grow for a certain period of time in the container 1'. The plant together with its entire mass of earth or cultivation substrate may be re-planted several times.

When the plant is ready to be delivered it is moved, still in the same container or pot 1', to e.g. a retailer's place C, where the plant/earth mass is placed in an irrigation stand of substantially the same type as the irrigation tube 24 in part B. From the irrigation stand in part C the cultivation pot 1' with the plant 20 is finally moved to the ultimate cultivation place D.

Alternatively it is possible to move the plant 20 in the same cultivation pot 1' from the pre-cultivation part B to the ultimate cultivation place D, which place can be in homes, in public places, in garden plants outdoor or indoor, in a free-supported vegetable cultivation plant, in a market stall, in a foodstuff shop etc.

Thus, upon delivery of a plant to the retailer, the shop, or eventually directly to the consumer the same cultivation container 1 and 1' together with the plant 20 cultivated therein is taken, without any type or re-potting and is placed standing on top of a moisture bed, for instance on top of a water foot 3, which with the upper part 16 thereof can extend a slight distance into the bore 7 of the cultivation pot. Upon a direct surface contact the moisture bed transmits water, nutrients (fertilizers) and also oxygen to the earth and to the plant in the pot 6. The water foot 3 also keeps the pot 1' steadily secured on the intermediate disc 2. The cultivation pot 1' may be standing some time both in the pre-cultivation part B and in the retailer's place or in the shop C, and it maintains under said circumstances exactly the same cultivation conditions as during the pre-cultivation thereof B, and therefore the plant is not subjected to any cultivation shocks whatsoever which might otherwise have impaired the growth capacity of the plant.

Also when the cultivation pot with the plant is distributed to the consumer there is used the same original cultivation pot 1' with the plant continuously cultivated therein, and said pot with the plant is put down on the pre-mounted irrigation apparatus with the moisture bed of the water foot 3 in direct contact with the earth in the pot 1' and with the upper part 16 of the water foot 3 eventually projecting some distance into the bore 7 of the cultivation pot 1'.

When, after some time, it is desired to exchange the "old" plant by a new one the cultivation pot 1' together with the plant living therein is quite simply removed and it is substituted by a "new" cultivation pot with a "new" plant. Illnesses on the foliage of the plant can never get down into the water 21 of the water container 4. Since the capillary movement in the earth or the cultivation substrate can only go in the direction upwards there is also no possibility for illnesses to be transmitted downwards through the earth to the water of the water tank, and therefore there is also no risque that any possible illness be transmitted to other plants via the water, not even if several plants are placed aside of each other in one and the same water container or tank. As a consequence there is normally no need for exchange of water 21 or of earth 19 in the foot 3. It is usually quite sufficient to fill water and eventually fertilizer on chosen occasions.

In many cases it is desirous or even necessary to change, by time, the growth conditions for the plants during the pre-cultivation. In particular it has shown advisable to change the water temperature, the air temperature, the degree or humidity, and the light conditions at certain intervals. It may for instance be advisable that a plant be allowed to rest under certain periods of the pre-cultivation phase, and it may thereby be preferred to reduce the light and the water and air temperatures; in other cases the plant can be forced slightly harder, and thereby the light, and the water and air temperatures and the degree of moisture can be increased again.

For making such variations of the cultivation conditions possible the pre-cultivation can follow along a conveyor system 26 as shown in the form of diagrammatic examples in figures 8 and 9. In figure 8 the plant container are brought to follow a conveyor 26 between various stations which are delimited by partition walls and in which the cultivation conditions can be varied as desired. Figure 9 shows a pre-cultivation apparatus of conveyor type, in which the various stations are arranged adjacent a side wall of a greenhouse or a similar premise, and in which the conveyor 26 extends past stations having various cultivation conditions.

A way of fulfilling the conveyor principle is shown in figures 10 and 11. In said figures there are shown several elongated water containers 25 provided on Line with each other, each water container 25 having several cultivation pots 1'' with plants therein and provided side by side Each water container is hanging in an overhead conveyor 28 which is parallelly displaced along a path 26, for instance as illustrated in figures 8 and 9. Various parts of the path can present various cultivation conditions, which can be varied as desired depending on the type of plant to be cultivated, whether there is question of ornamental plants, flowers, bushes, pine plants, trees, vegetables etc. There are many alternatives, and it is very simple, upon need, to only remove a cultivation pot together with its plant and to mount same on another water container and/or to substitute same by a new plant, which has not yet been pre-cultivated.

Rather than using an overhead conveyor it is, of course, possible to use a horizontal belt conveyor, a chain conveyor, any type of elevator apparatus or a similar apparatus.

### Reference numerals

- 1: seed propagation container
- 2: intermediate disc
- 3: water sucking foot
- 4: water container
- 5: water/air tube
- 6: earth
- 7: bore
- 8: slots
- 9: flange
- 10: intermediate plane
- 11: bore
- 12: slots
- 13: overflow rim
- 14: bottom edge
- 15: lower foot part
- 16: upper foot part
- 17: flange
- 18: water bore
- 19: earth
- 20: plant
- 21: water
- 22: outer container
- 23: bore
- 24: irrigation tube
- 25: water container
- 26: conveyor system
- 28: overhead conveyor

## Claims

1. Method for integrated cultivation of plants in containers or pots (1; 1') which is/are filled with earth (6) or another cultivation substrate, whereby the plant is cultivated in several stages (A, B, C, D), in a pre-cultivation or nursing stage (A) in a first container (1) having a bottom which is at least partly open and placed standing in surface contact with a moisture emitting bed, and in several successive stages (B, C, D) in a second container (1') which, at the bottom thereof, has a through bore (7), which, as to shape and size, fits an upwardly projecting part of a water sucking foot (3) filled with earth or another water sucking substrate (19), so that the upper surface of said water sucking substrate is brought into contact with the earth (6) of the cultivation container or pot (1'), and in which method said second cultivation container (1') together with its plant (20), when being moved from one cultivation stage (B) to a succeeding cultivation stage (C, D), is lifted off and is moved from the water sucking foot (3) belonging to a first stage (B) water system (24; 4) and is put down, with its through bottom bore (7) over the upwardly projecting part of the water sucking foot (3) of the water system of said succeeding cultivation stage (C, D), **characterized**
in that the seed is sown and a plant (20) is initially cultivated in a seed growth, plant nursery stage (A), is main cultivated in a succeeding pre-cultivation stage (B) and in an intermediate cultivation or retailer's stage (C), and is ultimately cultivated in an ultimate cultivation stage (D), e.g. at the consumer's place, whereby said succeeding several stage cultivation (B, C, D) is made in one and the same cultivation container (1'), which may be of a simple and cheap type, in particular a disposable container, and which, at the bottom thereof, aside of the bore (7) for the water sucking foot (3), has also several narrow slots or bores (8) for draining of excess of water from the earth (6) of the cultivation container (1') and for aerating/oxygenizing of the earth (6) of the cultivation container (1').

2. Method according to claim 1, **characterized** in that the plant (20) is allowed to grow at the consumer's place (D) until it is actual to exchange the plant by a new one, whereby the original cultivation container or pot (1'), together with the original plant (20), is simply lifted off its water foot (3) which is filled with earth or another cultivation substrate and is quickly and simply replaced by another container or pot (1') with a plant (20) which has been pre-cultivated (B, C) therein, exactly like a previously cultivated plant (20) in a cultivation pot (1') of disposable type.

3. Method according to claim 1 or 2, **characterized** in that the cultivation pot (1') with the plant (20) therein is allowed to grow in any of the succeeding cultivation stages (B, C) with the cultivation container or pot (1') with the plant (20) therein standing on top of a water sucking foot (3), which is, in turn, mounted in an irrigation tube (24), and in that the cultivation container or pot (1') with the plant (20) therein is, also at the consumer's place (D), allowed to grow standing on a water sucking foot (3) filled with earth and of the same type as that at the intermediate cultivation place (B) and the retailer's place (C).

4. Method according to claim 1, 2 or 3, in which the cultivation is started by a seed propagation (A), **characterized** in that the seed is set in each one of a large number of seed propagation containers (1) in a propagation brim, and in that the seed propagation brim is placed standing on top of a moisture bed (2) of sand, rockwool, a fibrous material or a similar material having a capillary sucking property, which bed is moistened only sparingly by one, or a few, water sucking feet (3) extending from a water container (4) to the the bottom surface of the capillary moisture bed, and whereby the seed is allowed to germinate and to grow softly subjected to a sparing and cautiously incresed moistening. (Figure 1, 2)

5. Method according to any of the preceding claims, **characterized** in that the plant is pre-cultivated (B) in a conveyor system arranged and formed so that the cultivation conditions, for instance the temperature, the air humidity and the light are controlled/changed at chosen intervals for providing an optimum growth of the plant and for making the plant acoustomed to the forthcoming ultimate cultivation conditions. (Figures 8-11)

6. Apparatus for executing the method according to any of claims 1-5 for obtaining a complete, integrated cultivation of plants in a pre-cultivation stage (B), in an intermediate cultivation stage (C) and at a consumer's place (D), which apparatus comprises, for the pre-cultivation, intermediate cultivation and ultimate cultivation stages (B,C, D),
- a simple and cheap cultivation container or pot (1') in particular a container or pot of disposable type, which is filled with earth or a cultivation substrate (6),
- an irrigation apparatus for each of the different cultivation stages (B, C, D) comprising a container (24; 4) having water therein,
- a water sucking foot (3) provided for each of the different cultivation stages (B, C, D), which water sucking foot (3) is filled with earth or another water sucking substrate (19), and which, with an upper portion (16) thereof, projects upwardly,
- said cultivation container or pot (1') having a through bore (7) at the bottom thereof, which bore, as to shape and size matches the size and shape of said upwardly projecting portion (16) of the water sucking foot (3), so that the cultivation container or pot (1') with the bottom bore (7) thereof can be put down over said upwardly projecting part of the water sucking foot (3), whereby the water sucking medium (19) of said water sucking foot (3) comes into contact with the cultivation substrate (6) in the cultivation pot (1), **characterized**
- in that the apparatus - for making it possible to pre-cultivate (B), to intermediate cultivate (C) and to ultimate-cultivate (D) the plant (20) when moving said cultivation pot (1') together with the plant (20) between the different cultivation phases (B, C, D) - comprises a cultivation container (1') for each of said successive cultivation phases,
- and a separate water container (24; 4) for each one of said successive cultivation stages (B, C, D),
- which cultivation container is formed with several narrow slots or bores (8) arranged aside of the through water foot bore (7) at the bottom of the cultivation pot (1) for draining of any possible excess of water from the earth (6) of the cultivation pot (1') and for aearating/oxygenizing the earth of the cultivation pot (7).

7. Apparatus according to claim 6, **characterized** in that there is a long time irrigation means in the ultimate cultivation apparatus (C), which means comprises a water container (4) containing water and eventually a fertilizer, having an intermediate disc (2) or a lid arranged on top of said water container (4) and in which the water sucking foot (3), which is filled with a water sucking substrate (19), is mounted in said intermediate disc (2), so that said water foot (3) with the bottom portion (15) thereof is at least partly immersed in the water (21), and with the upper portion (16) thereof extends a slight above said intermediate disk (2).

8. Apparatus according to claim 7, **characterized** in that the intermediate disc (2) comprises a central support plane (10) having a through bore (11) into which the upper portion (16) of the water sucking foot (3) can be introduced, whereby said upper portion (16) of the water sucking foot (3) projects a distance above the disc support place (10), and in which said support plane (10) is formed with several narrow slots or bores (12) for allowing excess of water from the cultivation pot (1') to be drained into the water container (4) and for letting air/oxygen up from the water surface of the water container (4) into the earth (6) of the cultivation container or pot (1'), and in that said intermediate disc (2) has an upwardly projecting, all around same extending overflow edge (13) for excess water from the cultivation pot (1') and preferably also a downwardly extending bottom edge (14) for safely mounting of the intermediate disc (2) on top of the water container (4).

9. Apparatus according to claim 6, 7 or 8, **characterized** in that the through bore (7) of the cultivation pot (1') is provided at the centre of, or out of the centre of, the cultivation pot (1') and is arranged to receive the uppermost portion (16) of the water sucking foot (3) so as to provided a contact between the water sucking substrate (19) of the water sucking foot (3) and a minor surface portion of the earth (6) in the cultivation pot (1').

10. Apparatus according to any of claims 7-9, **characterized** in that the apparatus comprises a tube (5) extending through the intermediate disc (2) and down into the water container (4) for making it possible to fill water into the water container (4) from above and for introducing air/oxygen into the water container.

## Patentansprüche

1. Verfahren zum integrierten Aufziehen von Pflanzen in Behältern oder Töpfen (1;1'), die mit Erde (6) oder einem anderen Aufzucht-Substrat gefüllt sind, wobei die Pflanze in mehreren Stufen (A,B,C,D) aufgezogen wird, nämlich in einer Voraufzucht- oder Pflegestufe (A) in einem ersten Behälter (1), der einen zumindest teilweise offenen Boden aufweist und in Oberflächenkontakt mit einem Feuchtigkeit abgebenden Bett steht, und in mehreren nachfolgenden Stufen (B,C,D) in einem zweiten Behälter (1'), der in seinem Boden eine Durchgangsöffnung (7) aufweist, in die nach Form und Größe ein nach oben abstehender Teil eines mit Erde oder einem anderen wasserziehenden Substrat (19) gefüllten wasserziehenden Fußes (3) paßt, so daß die obere Fläche des wasserziehenden Substrats in Kontakt mit der Erde (6) des Aufzuchtbehälters oder -topfes (1') gebracht wird, und wobei der zweite Aufzuchtbehälter (1') zusammen mit seiner Pflanze (20) beim Umsetzen von einer Aufzuchtstufe (B) zu einer nachfolgenden Aufzuchtstufe (C,D) von dem wasserziehenden Fuß (3) eines einer ersten Stufe (B) zugeordneten Wassersystems (24;4) abgehoben und entfernt wird und mit seiner Boden-Durchgangsöffnung (7) auf den nach oben abstehenden Teil des wasserziehenden Fußes (3) des Wassersystems der nachfolgenden Aufzuchtstufe (C,D) aufgesetzt wird,
**dadurch gekennzeichnet,**
daß das Saatgut gesät und eine Pflanze (20) anfänglich in einer Samenwachstums- und Pflanzenpflegestufe (A) aufgezogen und hauptsächlich in einer nachfolgenden Voraufzuchtstufe (B) sowie in einer Zwischenaufzucht - oder Endverkaufsstufe (C) aufgezogen und in einer Endaufzuchtstufe (D) fertiggezüchtet wird, beispielsweise am Wohnort eines Verbrauchers, wobei die aufeinanderfolgende mehrstufige Aufzucht (B, C, D) in ein und demselben Aufzuchtbehälter vorgenommen wird, der einfach und kostengünstig und insbesondere ein Einwegbehälter sein kann und der in seinem Boden neben der Öffnung (7) für den wasserziehenden Fuß (3) außerdem einige schmale Schlitze oder Öffnungen (8) zum Abführen von Wasserüberschuß aus der Erde (6) des Aufzuchtbehälters (1') und zur Belüftung/Sauerstoffversorgung der Erde (6) des Aufzuchtbehälters (1') aufweist.

2. Verfahren nach Anspruch 1, dadurch gekennzeichnet, daß die Pflanze (20) am Wohnort (D) des Verbrauchers wachsen kann, bis es an der Zeit ist, sie gegen eine neue Pflanze auszutauschen, wobei der ursprüngliche Aufzuchtbehälter oder -topf (1') zusammen mit der ursprünglichen Pflanze (20) einfach von seinem mit Erde oder einem anderen Aufzucht-Substrat gefüllten Wasserfuß (3) abgehoben und schnell und einfach durch einen anderen Behälter oder Topf (1') mit einer Pflanze (20) ersetzt wird, die darin genauso vorgezüchtet (B, C) wurde, wie die zuvor aufgezogene Pflanze (20) in einem Einweg- Aufzuchttopf (1').

3. Verfahren nach Anspruch 1 oder 2, dadurch gekennzeichnet, daß die Pflanze (20) in dem Aufzuchttopf (1') in einer der nachfolgenden Aufzuchtstufen (B, C) wachsen kann, wobei der Aufzuchtbehälter oder -topf (1') mit der Pflanze (20) darin oben auf einem wasserziehenden Fuß (3) steht, der wiederum in einem Bewässerungsrohr (24) befestigt ist, und daß die Pflanze (20) in dem Aufzuchtbehälter oder -topf (1') auch am Wohnort (D) des Verbrauchers wachsen kann, während der Aufzuchtbehälter oder -topf (1') auf einem mit Erde gefüllten wasserziehenden Fuß (3) steht, der von der gleichen Art ist, wie der bei der zwischengeschalteten Aufzucht (B) und dem Endkäufer (C).

4. Verfahren nach Anspruch 1, 2 oder 3, bei dem die Aufzucht mit einer Saatgut-Aussaat (A) begonnen wird, dadurch gekennzeichnet, daß das Saatgut in viele Samen-Aussaatbehälter (1) in einem Aussaatrahmen eingesetzt wird und daß der Samen-Aussaatrahmen oben auf einem Feuchtigkeitsbett (2) aus Sand, Steinwolle, einem Faser- oder einem ähnlichen Material mit Kapillar-Saugfähigkeit angeordnet wird, wobei das Bett lediglich sparsam durch einen oder einige wenige aus einem Wasserbehälter (4) bis zu der unteren Oberfläche des Kapillar-Feuchtigkeitsbetts aufragende wasserziehende Füße (3) befeuchtet wird und wobei das Saatgut durch eine schonende und vorsichtig gesteigerte Befeuchtung sanft keimen und wachsen kann (Figur 1, 2).

5. Verfahren nach einem der vorherigen Ansprüche, dadurch gekennzeichnet, daß die Pflanze in einem Fördersystem vorgezüchtet (B) wird, das so angeordnet und ausgebildet ist, daß die Aufzuchtbedingungen, beispielsweise die Temperatur, die Luftfeuchtigkeit und das Licht in ausgewählten Intervallen gesteuert/verändert werden, um für ein optimales Wachstum der Pflanze zu sorgen und die Pflanze auf die nachfolgenden Endaufzucht-Bedingungen vorzubereiten (Figuren 8 - 11).

6. Vorrichtung zum Ausführen des Verfahrens nach einem der Ansprüche 1 bis 5 für eine vollständige integrierte Aufzucht von Pflanzen in einer Voraufzuchtsstufe (B), in einer zwischengeschalteten Aufzuchtstufe (C) und an einem Wohnort (D) eines Verbrauchers, wobei die Vorrichtung für die Vorzucht-, die zwischengeschaltete Aufzucht-, und die Endaufzuchtstufen (B, C, D) folgende Merkmale aufweist:
- einen einfachen und kostengünstigen Aufzuchtbehälter oder -topf (1'), insbesondere einen Einwegbehälter oder - topf, der mit Erde oder einem Aufzucht-Substrat (6) gefüllt ist,
- eine Bewässerungseinrichtung für jede der verschiedenen Aufzuchtstufen (B, C, D) mit einem wassergefüllten Behälter (24; 4),
- einen wasserziehenden Fuß (3) für jede der verschiedenen Aufzuchtstufen (B, C, D), der mit Erde oder einem anderen wasserziehenden Substrat (19) gefüllt ist und dessen Oberteil (16) nach oben absteht,
- wobei in dem Boden des Aufzuchtbehälters oder -topfes (1') eine Durchgangsöffnung (7) ausgebildet ist, die nach Größe oder Form dem nach oben abstehenden Teil (16) des wasserziehenden Fußes (3) gleicht, so daß der Aufzuchtbehälter oder -topf (1') mit seiner Bodenöffnung (7) auf den nach oben abstehenden Teil des wasserziehenden Fußes (3) gesetzt werden kann, wobei das wasserziehende Medium (19) des wasserziehenden Fußes (3) in Berührung mit dem Aufzucht-Substrat (6) in dem Aufzuchttopf (1) kommt, dadurch gekennzeichnet,
- daß die Vorrichtung - damit bei der Voraufzucht (B), der zwischengeschalteten Aufzucht (C) und der Endaufzucht (D) der Pflanze (20) der Aufzuchttopf (1') zusammen mit der Pflanze (20) zwischen den verschiedenen Aufzuchtphasen (B, C, D) bewegt werden kann - für sämtliche aufeinanderfolgende Aufzucht-Phasen einen Aufzuchtbehälter (1') aufweist
- sowie einen gesonderten Wasserbehälter (24; 4) für jede der aufeinanderfolgenden Aufzuchtstufen (B, C, D),
- wobei in dem Boden des Aufzuchtbehälters neben der Wasserfuß-Durchgangsöffnung (7) mehrere schmale Schlitze oder Bohrungen (8) ausgebildet sind, um jeglichen Wasserüberschuß aus der Erde (6) des Aufzuchttopfes (1') ablaufen zu lassen und die Erde des Aufzuchttopfes (1') zu belüften und mit Sauerstoff zu versorgen.

7. Vorrichtung nach Anspruch 6, dadurch gekennzeichnet, daß in der Endaufzucht-Vorrichtung (C) eine Langzeit-Bewässerungseinrichtung vorgesehen ist, die einen Wasser und eventuell einen Dünger enthaltenden Wasserbehälter (4) mit einer Zwischenplatte (2) oder einen Deckel aufweist, die bzw. der oben auf dem Wasserbehälter (4) angeordnet ist, wobei der mit dem wasserziehenden Substrat (19) gefüllte wasserziehende Fuß (3) in der Zwischenplatte (2) befestigt ist, so daß der Wasserfuß (3) mit seinem Unterteil (15) zumindest teilweise in das Wasser (21) eintaucht und mit seinem Oberteil (16) geringfügig über die Zwischenplatte (2) herausragt.

8. Vorrichtung nach Anspruch 7, dadurch gekennzeichnet, daß die Zwischenplatte (2) eine zentrale Trägerplatte (10) mit einer Durchgangsöffnung (11) aufweist, in die der Oberteil (16) des wasserziehenden Fußes (3) eingeführt werden kann, wodurch der Oberteil (16) des wasserziehenden Fußes (3) ein Stück über die Trägerplatte (10) vorsteht, wobei in der Trägerplatte (10) einige schmale Schlitze oder Bohrungen (12) ausgebildet sind, die Wasserüberschuß aus dem Aufzuchttopf (1') in den Wasserbehälter (4) ablaufen lassen und Luft/Sauerstoff von der Wasseroberfläche des Wasserbehälters (4) nach oben in die Erde (6) des Aufzuchtbehälters oder - topfes (1') eintreten lassen, und daß die Zwischenplatte (2) einen über den gesamten Umfang nach oben abstehenden Überlaufrand (13) für den Wasserüberschuß aus dem Aufzuchttopf (1') und vorzugsweise auch einen nach unten abstehenden Bodenrand (14) zur sicheren Befestigung der Zwischenplatte (2) oben auf dem Wasserbehälter (4) aufweist.

9. Vorrichtung nach Anspruch 6, 7 oder 8, dadurch gekennzeichnet, daß die Durchgangsöffnung (7) des Aufzuchttopfes (1') im Zentrum oder außerhalb des Zentrums des Aufzuchttopfes (1') angeordnet und derart ausgebildet ist, daß sie den obersten Teil (16) des wasserziehenden Fußes (3) aufnehmen kann, um das wasserziehende Substrat (19) des wasserziehenden Fußes (3) und einen kleinen Oberflächenbereich der Erde (6) in dem Aufzuchttopf (1') in Kontakt miteinander zu bringen.

10. Vorrichtung nach einem der Ansprüche 7 bis 9, dadurch gekennzeichnet, daß die Vorrichtung ein Rohr (15) aufweist, das sich durch die Zwischenplatte (2) hindurch nach unten in den Wasserbehälter (4) hereinerstreckt, damit von oben Wasser in den Wasserbehälter (4) eingefüllt und Luft/Sauerstoff in den Wasserbehälter eingeführt werden kann.

## Revendications

1. Méthode pour la culture intégrée de plantes dans des récipients ou des pots (1 ; 1') qui est/sont remplis de terre (6) ou d'un autre substrat de culture, dans laquelle la plante est cultivée en plusieurs étapes (A, B, C, D), dans une étape de préculture ou de pépinière (A) dans un premier récipient (1) ayant un fond qui est au moins partiellement ouvert et posé, en contact par sa surface avec un lit dispensant de l'humidité, et dans plusieurs étapes successives (B, C, D) dans un second récipient (1'), qui a, en son fond, un trou percé (7), qui, en forme et en taille, s'adapte sur une partie saillant vers le haut d'un pied absorbant l'eau (3) rempli de terre ou d'un autre substrat absorbant l'eau (19), de façon à ce que la surface supérieure dudit substrat absorbant l'eau soit amenée en contact avec la terre (6) du récipient ou pot de culture (1'), méthode dans laquelle le second récipient de culture (1') avec sa plante (20), lorsqu'on le déplace de l'étape de culture (B) à une étape de culture suivante (C, D), est soulevé et retiré du pied absorbant l'eau (3) appartenant à un système d'apport d'eau d'une première étape (B) (24 ; 4) et est déposé, avec son trou percé au fond (7) sur la partie saillant vers le haut du pied absorbant l'eau (3) du système d'apport d'eau desdites étapes de culture suivantes (C, D), **caractérisée**
en ce que la graine est semée et qu'une plante (20) est initialement cultivée dans une étape de croissance des graines, de pépinière de plantes (A), est principalement cultivée dans une étape de préculture consécutive (B) et dans une étape de culture intermédiaire ou du détaillant (C), et est enfin cultivée dans une dernière étape de culture (D), par exemple chez le consommateur, où ladite culture en plusieurs étapes successives (B, C, D) est mise en oeuvre dans un seul et même récipient (1'), qui peut être d'un type simple et peu coûteux, en particulier dans un récipient jetable, et qui, sur son fond, à côté du trou (7) pour le pied absorbant l'eau (3), comporte également plusieurs trous ou fentes étroits (8) pour drainer l'eau en excès de la terre (6) du récipient de culture (1') et aérer/oxygéner la terre (6) du récipient de culture (1').

2. Méthode selon la revendication 1, **caractérisée** en ce qu'on laisse pousser la plante (20) chez le consommateur (D) jusqu'à ce qu'il faille remplacer la plante par une nouvelle, dans laquelle le récipient ou pot de culture (1), avec la plante originelle (20), est simplement retiré de son pied pour l'eau (3) qui est rempli de terre ou d'un autre substrat de culture, et est rapidement et simplement remplacé par un autre pot ou récipient (1') avec une plante (20) qui a été précultivée (B, C) dedans, exactement comme une plante (20) préalablement cultivée dans un pot de culture (1') jetable.

3. Méthode selon la revendication 1 ou 2, **caractérisé** en ce qu'on laisse le pot de culture (1') avec la plante (20) dedans se développer dans toutes les étapes de culture suivantes (B, C) avec le récipient ou le pot de culture (1') avec la plante (20) contenue dedans posé au-dessus du pied absorbant l'eau (3), qui est, quant à lui, monté dans un tube d'irrigation (24), et en ce qu'on laisse le récipient ou pot de culture (1) avec la plante (20) dedans, également chez le consommateur (D), se développer posée sur un pied absorbant l'eau (3) rempli de terre et du même type que celui du lieu de culture intermédiaire (B) et du lieu de vente au détail (C).

4. Méthode selon la revendication 1, 2 ou 3, dans laquelle on commence la culture par une propagation de graines (A), **caractérisée** en ce que les graines sont déposées dans chacun d'un grand nombre de récipients pour propagation de graines (1) dans une bordure pour propagation, et en ce que la bordure de propagation des graines est placée au dessus d'un lit humide (2) de sable, de laine de roche, d'un matériau de fibreux ou d'un matériau similaire ayant des propriétés d'absorption capillaire, ce lit n'étant humidifié que parcimonieusement par un ou quelques pieds absorbant l'eau (3) allant d'un récipient d'eau (4) jusqu'à la surface inférieure du lit d'humidification capillaire, grâce à quoi on laisse les graines germer et pousser doucement soumises à une humidification qui augmente parcimonieusement et prudemment. (Figure 1, 2)

5. Méthode selon l'une quelconque des revendications précédentes, **caractérisée** en ce que la plante est précultivée (B) dans un système de transport arrangé et conçu de telle sorte que les conditions de culture, par exemple la température, l'humidité de l'air et la lumière soient contrôlées/modifiées à des intervalles choisis pour obtenir une croissance optimale de la plante et pour accoutumer la plante aux conditions de culture finales à venir. (Figures 8-11)

6. Appareil pour mettre en oeuvre la méthode selon l'une quelconque des revendications 1-5, pour obtenir une culture intégrée complète des plantes dans une étape de préculture (B), dans une étape de culture intermédiaire (C) et chez le consommateur (D), cet appareil comprenant, pour les étapes de préculture, de culture intermédiaire et de culture finale (B, C, D),
- un récipient ou pot de culture (1') simple et peu coûteux, en particulier un récipient ou pot jetable, qui est rempli de terre ou d'un substrat de culture (6),
- un appareil d'irrigation pour chacune des différentes étapes de culture (B, C, D) comprenant un récipient (24 ; 4) contenant de l'eau,
- un pied absorbant l'eau (3) fourni pour chacune des différentes étapes de culture (B, C, D), ce pied absorbant l'eau (3) étant rempli de terre ou d'un autre substrat absorbant l'eau (19), et qui, grâce à une partie supérieure (16), saille vers le haut,
- ledit récipient ou pot (1') ayant un trou de perçage (7) en son fond, ce trou s adaptant en forme et en taille à la forme et à la taille de ladite partie saillant vers le haut (16) du pied absorbant l'eau (3), de façon à ce que le récipient ou le pot de culture (1') avec son trou au fond (7) puisse être déposé sur ladite partie saillant vers le haut du pied absorbant l'eau (3), grâce à quoi le milieu absorbant l'eau (19) dudit pied absorbant l'eau (3) entre en contact avec le substrat de culture (6) dans le pot de culture (1), **caractérisé**
- en ce que l'appareil - pour permettre la préculture (B), la culture intermédiaire (C) et la culture finale (D) de la plante (20) lorsqu'on déplace le pot de culture (1') avec la plante (20) entre les différentes phases de culture (B, C, D) - comprend un récipient de culture (1') pour chacune des dites phases de culture successives,
- et un récipient d'eau séparée (24 ; 4) pour chacune des dites étapes de culture successives (B, C, D),
- ce récipient de culture étant formé avec plusieurs fentes ou trous (8) étroits disposés à côté du trou du pied absorbant l'eau (7) percé au fond du pot de culture (1) pour drainer tout excès éventuel d'eau de la terre (6) du pot de culture (1') et pour aérer/oxygéner la terre du pot de culture (7).

7. Appareil selon la revendication 6, **caractérisé** en ce qu'il y a un dispositif d'irrigation de longue durée dans l'appareil de culture finale (C), ce dispositif comprenant un récipient d'eau (4) contenant de l'eau et éventuellement un engrais, ayant un disque intermédiaire (2) ou un couvercle disposé sur ledit récipient d'eau (4) et dans lequel le pied absorbant l'eau (3), qui est rempli d'un substrat absorbant l'eau (19), est monté sur ledit disque intermédiaire (2) de façon à ce que sa partie du fond (15) soit au moins partiellement immergé dans l'eau (21), et avec sa partie supérieure (16) se prolongeant légèrement au dessus dudit disque intermédiaire (2).

8. Appareil selon la revendication 7, **caractérisé** en ce que le disque intermédiaire (2) comprend un plan de support central (10) ayant un trou percé (11) dans lequel la partie supérieure (16) du pied absorbant l'eau (3) peut être introduite, grâce à quoi la partie supérieure (16) du pied absorbant l'eau (3) saille à une certaine distance au dessus de l'emplacement de support de disque (10), et dans lequel sont formés dans le plan de support (10) plusieurs trous ou fentes (12) étroits pour permettre le drainage d'un excès d'eau du pot de culture (1') dans le récipient d'eau (4) et pour laisser l'air/oxygène monter de la surface de l'eau du récipient d'eau (4) dans la terre (6) du récipient ou pot de culture (1'), et en ce que ledit disque intermédiaire (2) a une rebord dépassant vers le haut, identique sur tout son pourtour contre le débordement (13) de l'eau en excès à partir du pot de culture (1') et de préférence également un rebord de fond s'étendant vers le bas (14) pour assurer le montage du disque intermédiaire (2) au dessus du récipient d'eau (4).

9. Appareil selon la revendication 6, 7 ou 8, **caractérisé** en ce que le trou percé (7) du pot de culture (1') est placé au centre, ou en dehors du centre, du pot de culture (1') et est disposé de façon à recevoir la partie supérieure (16) du pied absorbant l'eau (3) de façon à permettre le contact entre le substrat absorbant l'eau (19) du pied absorbant l'eau (3) et une surface mineure de la terre (6) dans le pot de culture (1).

10. Appareil selon l'une quelconque des revendications 7-9, **caractérisé** en ce que l'appareil comprend un tube (5) s'étendant à travers le disque intermédiaire (2) et vers le bas dans le récipient d'eau (4) pour permettre le remplissage d'eau le récipient d'eau avec de l'eau (4) du dessus et pour l'introduction d'air/oxygène dans le récipient d'eau.
